# EUROPEAN PATENT SPECIFICATION

(11) **EP 1 119 889 B1**
(45) Date of publication and mention of the grant of the patent: **25.06.2003**
(21) Application number: 99949454.5
(22) Date of filing: 04.10.1999
(51) Int. Cl.: H01S 3/223, H01S 3/036, H01S 3/038

(54) **CO2-LASER COMPRISING CARBON MONOXIDE**
KOHLENMONOXID ENTHALTENDER CO2-LASER
LASER AU CO2 COMPRENANT DU MONOXYDE DE CARBONE

(30) Priority: 05.10.1998 NL 1010246
(43) Date of publication of application: 01.08.2001
(73) Proprietor: STICHTING VOOR DE TECHNISCHE WETENSCHAPPEN, 3527 JP Utrecht (NL)
(72) Inventor: OUDALOV, Iouri Borisovitch, NL-7522 NA Enschede (NL); STAROSTINE, Serquei Alexandrovich, NL-7523 DM Enschede (NL); PETERS, Peter, Jacobus, Maria, NL-7581 CL Losser (NL); WITTEMAN, Wilhelmus, Jacobus, NL-7552 GR Hengelo (NL)
(74) Representative: Kupecz, A., Drs. c.s.
(86) International application number: NL9900613
(87) International publication number: WO00021167

(56) References cited:
- US-A- 3 810 043
- US-A- 4 945 543
- TRIPATHI A K ET AL: "DEVELOPMENT OF A SEALED-OFF CW CO2 LASER USING A SUPPORTED GOLD CATALYST" REVIEW OF SCIENTIFIC INSTRUMENTS,US,AMERICAN INSTITUTE OF PHYSICS. NEW YORK, vol. 65, no. 12, page 3853-3855 XP000497285 ISSN: 0034-6748
- MACKEN J A ET AL: "CO2 LASER PERFORMANCE WITH A DISTRIBUTED GOLD CATALYST" IEEE JOURNAL OF QUANTUM ELECTRONICS,US,IEEE INC. NEW YORK, vol. 25, no. 7, July 1989 (1989-07), page 1695-1703 XP000054786 ISSN: 0018-9197
- THKHAI S N ET AL: "THE CATALYTIC ACTIVITY OF GOLD-PLATED ELECTRODES IN A SLAB-GIOMETRY CO2 LASER" APPLIED PHYSICS B: LASERS AND OPTICS,DE,SPRINGER INTERNATIONAL, BERLIN, vol. B65, no. 1, page 45-48 XP000658714 ISSN: 0946-2171
- PATENT ABSTRACTS OF JAPAN vol. 010, no. 170 (E-412), 17 June 1986 (1986-06-17) & JP 61 022680 A (NIPPON SENBAI KOSHA;OTHERS: 01), 31 January 1986 (1986-01-31)

## Description

The present invention relates to a CO₂ laser comprising at least two electrodes which, electrically isolated from each other, define a longitudinal excitation cavity,
- which CO₂ laser further comprises an RF source for the supply of an alternating voltage over the electrodes,
- wherein a gold-comprising catalyst is applied substantially over the entire length of the excitation cavity; and
- a carbon dioxide- and carbon monoxide-comprising gas is present in the excitation cavity.

Such a CO₂ laser is known from the US patent publication 4,756,000, and more in particular, it describes an RF-operated laser provided with a gold catalyst. During operation of a CO₂ laser, a part of the carbon dioxide decomposes into carbon monoxide and oxygen. Certain ensuing decomposition products have an adverse effect on the power the laser is able to supply (column 1, line 32). In order to eliminate this adverse effect, the CO₂ laser described is provided with a gold catalyst which promotes the formation of CO₂ from CO and O₂. In the light of the described insight that CO forms a monolayer on the gold, in this publication a gas mixture comprising a slight excess of CO (column 10 line 13) is preferred for a CO₂ laser. This excess is in particular the excess obtained by providing a catalytic gold surface with CO (activation before use of the laser). It is said that the addition of CO does not work as rapidly as when using other gas mixtures (column 10, line 10).

It is the object of the present invention to provide an improved RF CO₂ laser having a shorter starting-up time.

IEEE Journal of Quantum Electronics, Vol. 25 (1989) July, no. 7, pages 1695-1704 discloses a CO₂ laser according to the preamble of claim 1.

To this end the CO₂ laser according to the invention as defined in claim 1 is characterized in that the molar ratio of carbon monoxide to carbon dioxide in the lasing gas at the beginning of the starting-up time of the lasing operation is at least 0.5 so as to decrease the starting-up frame of the lasing operation.

Contrary to the prevailing and in US 4,756,000 expressed opinion, applicant has surprisingly found, that (decomposition products of) CO is useful for a quick start. This means that a CO₂ laser can be used over a larger part of a working day and can thus be operated more economically. At the same time, the relatively high CO concentration ensures that the gold-comprising catalyst does not need to be heated. In addition to CO₂ and CO, a gas mixture for a CO₂ laser may also comprise other gasses known in the art to be used for this purpose, such as He and N₂. In the present application the term "substantially entire length" is understood to be a section that may or may not be interrupted, and an interruption (over the whole width) in the longitudinal direction is at most twice the distance between the electrodes.

According to a preferred embodiment the molar ratio of carbon monoxide to carbon dioxide is at least 0.6.

Such molar ratios make it possible to realize shorter starting-up times.

According to an interesting embodiment, an element provided with the gold-comprising catalyst is positioned in the excitation cavity between the electrodes and substantially parallel thereto.

This shortens the average diffusion distance of oxygen and carbon monoxide to the catalyst.

The element provided with the gold-comprising catalyst may be an element provided with passing-through openings.

The openings make it possible for the RF source to generate a plasma between the electrodes. The element may, for example, be a perforated plate, a comb-like plate, or a gauze.

According to an interesting embodiment, the gold-comprising catalyst is provided on an electrode.

This actually creates two excitation cavities which may be in communication via, for example, passing-through openings that may be present in the electrode. In this embodiment, the outer two electrodes are electrically connected and together they are connected to the RF source, and possess a common potential with respect to the electrode comprising the catalyst.

In such a case the electrode may also be an electrode which is not provided with passing-through openings.

According to a favourable embodiment the electrode provided with catalyst is an earthed electrode.

Such an electrode requires less cooling, which is especially advantageous when cooling an electrode provided with catalyst positioned substantially parallel between two other electrodes in the excitation cavity, since heat dissipation can only occur in the plane of the electrode.

The present invention will now be elucidated with reference to the appended drawings, in which
Fig. 1 represents a schematic longitudinal cross section of a CO₂ laser according to the invention;
Fig. 2 represents a transversal cross section of the CO₂ laser according to line II-II shown in Fig. 1; and
Fig. 3 represents a graph in which the normalized power is plotted against the time for the CO₂ laser according to the invention and a reference CO₂ laser.

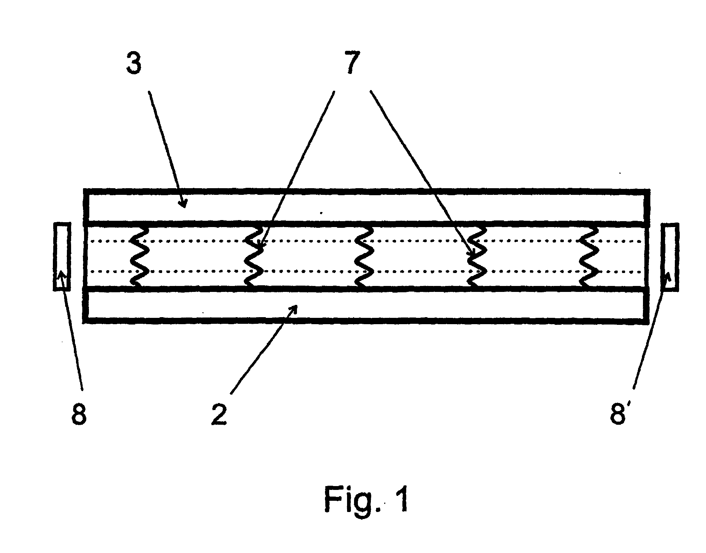

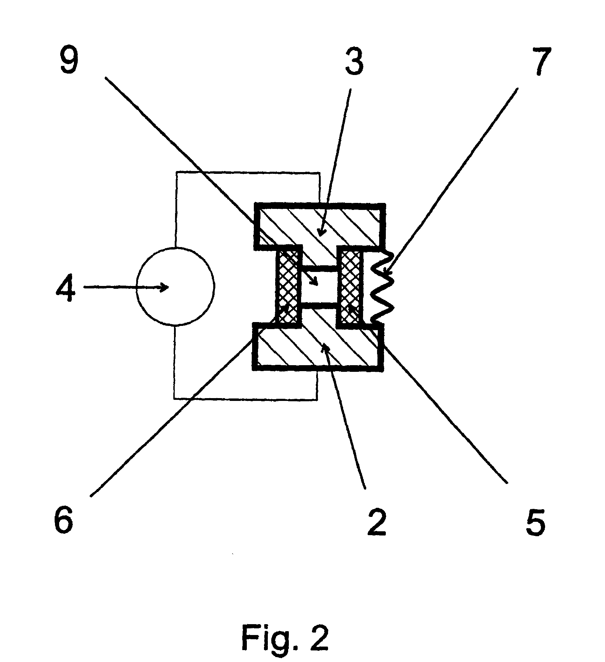

The CO₂ laser schematically represented in Fig. 1 comprises a first electrode 2 and a second electrode 3. Both electrodes are made of copper and connected to an RF source 4 (Rohde & Schwartz, VU-315, Germany) as shown in Fig. 2. Both electrodes were provided with a 2 micrometres layer of gold by means of vaporization. The electrodes were kept at a distance from each other by means of dielectric spacers 5, 6, made of ceramic material. In the embodiment described here, the spacers ensure that the electrodes 2, 3 are spaced at a 2 mm distance. The part of each electrode defining the excitation cavity is 37 cm long and the 15 mm wide. The electrodes 2, 3 are connected by means of shunt coils 7, in a manner known in the art. The CO₂ laser further comprises two mirrors 8 and 8'.

The electrodes 2, 3 and the dielectric spacers 5, 6 define an excitation cavity 9, containing a CO₂-comprising gas.

The CO₂ laser described above, which is generally known in the art, was operated with various compositions of gas, as shown in Table I.

**TABLE I**

| **Invention** | **CO**_{**2**} | **N**_{**2**} | **He** | **CO** | **Xe** | **CO/CO**_{**2**} |
|---|---|---|---|---|---|---|
| Composition 1 | 6,14¹ | 9,21 | 73,68 | 6 | 5 | 0.98 |
| Composition 2 | 6,41 | 9,62 | 76,37 | 2 | 5 | 0,31 |
| Reference | 6,55 | 9,83 | 78,62 | 0 | 5 | 0 |

| | | | | | | |
|---|---|---|---|---|---|---|
| ¹ Amounts of gas expressed as percentages by volume of the total gas composition. | | | | | | |

The total gas pressure in each of the cases was 16 kPa.

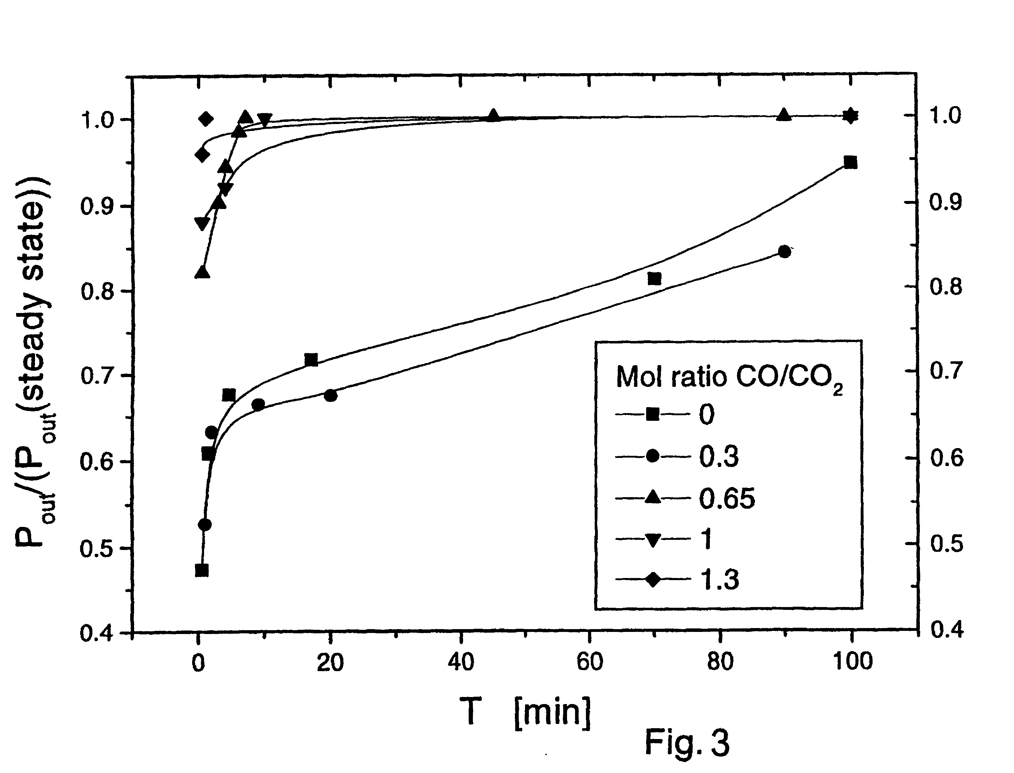

The effect of the gas composition on the starting-up time is shown in Fig. 3. The graph shows clearly that, surprisingly, an considerable excess of CO has a favourable effect on the starting-up time. Instead of obtaining a stable output after more than an hour, this can be realized after only a few minutes. Normalization for each gas composition resulted by dividing the power output by the ultimately realized constant power output.

## Claims

1. A CO₂ laser comprising at least two electrodes (2,3) which, electrically isolated from each other, define a longitudinal excitation cavity (9),
- which CO₂ laser further comprises an RF source for the supply of an alternating voltage over the electrodes (2,3),
- wherein a gold-comprising catalyst is applied substantially over the entire length of the excitation cavity (9) and the surface area of the gold-comprising portion of the gold-comprising catalyst is at least 10% of the surface area facing the excitation cavity of one of the electrodes; and
- a carbon dioxide- and carbon monoxide-comprising lasing gas is present in the excitation cavity (9),
**characterized in that** the initial molar ratio of carbon monoxide to carbon dioxide in said lasing gas at the beginning of the starting-up time of the lasing operation is at least 0,5 so as to decrease the starting-up time of the lasing operation.

2. A CO₂ laser according to claim 1, **characterized in that** the initial molar ratio of carbon monoxide to carbon dioxide is at least 0.6.

3. A CO₂ laser according to one of the preceding claims, **characterized in that** an element provided with the gold-comprising catalyst is positioned in the excitation cavity (9) between the electrodes (2,3) and substantially parallel thereto.

4. A CO₂ laser according to claim 3, **characterized in that** the element provided with the gold-comprising catalyst is an element provided with passing-through openings.

5. A CO₂ laser according to one of the preceding claims, **characterized in that** the gold-comprising catalyst is provided on an electrode.

6. A CO₂ laser according to claim 5 when dependent on claim 3 or 4, **characterized in that** the electrode provided with catalyst is an earthed electrode.

## Patentansprüche

1. Ein CO₂-Laser, der zumindest zwei Elektroden (2, 3) aufweist, die, elektrisch isoliert voneinander, einen longitudinalen Anregungshohlraum (9) definieren,
wobei der CO₂-Laser ferner eine HF-Quelle für die Lieferung einer Wechselspannung über die Elektroden (2, 3) aufweist,
wobei ein Gold-aufweisender Katalysator im wesentlichen über die gesamte Länge des Anregungshohlraums (9) angelegt ist, und der Oberflächenbereich des Gold-aufweisenden Abschnitts des Gold-aufweisenden Katalysators mindestens 10% des Oberflächenbereichs ist, der dem Anregungshohlraum einer der Elektroden zugewandt ist; und
ein Kohlendioxid- und ein Kohlenmonoxid-aufweisendes zum Lasern fähiges Gas in dem Anregungshohlraum (9) vorhanden ist,
**dadurch gekennzeichnet, daß** das anfängliche Molverhältnis von Kohlenmonoxid zu Kohlendioxid in dem zum Lasern fähigen Gas zu Beginn der Startzeit der Laseroperation bei zumindest 0,5 liegt, um die Startzeit der Laseroperation zu verringern.

2. Ein CO₂-Laser gemäß Anspruch 1, **dadurch gekennzeichnet, daß** das anfängliche Molverhältnis von Kohlenmonoxid zu Kohlendioxid mindestens 0,6 ist.

3. Ein CO₂-Laser gemäß einem der vorangehenden Ansprüche, **dadurch gekennzeichnet, daß** ein Element, das mit dem Gold-aufweisenden Katalysator versehen ist, in dem Anregungshohlraum (9) zwischen den Elektroden (2, 3) und im wesentlichen parallel zu denselben positioniert ist.

4. Ein CO₂-Laser gemäß Anspruch 3, **dadurch gekennzeichnet, daß** das Element, das mit dem Gold-aufweisenden Katalysator versehen ist, ein Element ist, das mit Durchgangsöffnungen versehen ist.

5. Ein CO₂-Laser gemäß einem der vorangehenden Ansprüche, **dadurch gekennzeichnet, daß** der Gold-aufweisende Katalysator auf einer Elektrode versehen ist.

6. Ein CO₂-Laser gemäß Anspruch 5, wenn derselbe abhängig von Anspruch 2 oder 3 ist, **dadurch gekennzeichnet, daß** die Elektrode, die mit dem Katalysator versehen ist, eine mit Masse verbundene Elektrode ist.

## Revendications

1. Laser à CO₂ comprenant au moins deux électrodes (2,3) qui en étant isolées électriquement l'une de l'autre, définissent une cavité d'excitation longitudinale (9),
- lequel laser au CO₂ comprend en outre une source RF pour appliquer une tension alternative aux électrodes (2,3),
- dans lequel un catalyseur comprenant de l'or est appliqué essentiellement sur toute la longueur de la cavité d'excitation (9) et la surface spécifique de la partie comprenant de l'or du catalyseur comprenant de l'or est égale à au moins 10 % de la surface spécifique tournée vers la cavité d'excitation de l'une des électrodes; et
- un gaz à effet laser comprenant du gaz carbonique et du monoxyde de carbone est présent dans la cavité d'excitation (9),
**caractérisé en ce que** le rapport molaire initial du monoxyde de carbone au gaz carbonique dans ledit gaz à effet laser au début de la période de démarrage du fonctionnement avec effet laser est égal au moins à 0,5 de manière à diminuer la durée de démarrage du fonctionnement avec effet laser.

2. Laser à CO₂ selon la revendication 1, **caractérisé en ce que** le rapport molaire initial du monoxyde de carbone au gaz carbonique est égal à au moins 0,6.

3. Laser à CO₂ selon l'une des revendications précédentes, **caractérisé en ce qu'**un élément du catalyseur comprenant de l'or est positionné dans la cavité d'excitation (9) entre les électrodes (2,3) et est essentiellement parallèle à ces dernières.

4. Laser à CO₂ selon la revendication 3, **caractérisé en ce que** l'élément du catalyseur comprenant de l'or est un élément pourvu d'ouvertures traversantes.

5. Laser à CO₂ selon l'une des revendications précédentes, **caractérisé en ce que** le catalyseur comprenant de l'or est disposé sur une électrode.

6. Laser à CO₂ selon la revendication 5, considérée comme dépendante de la revendication 3 ou 4, **caractérisé en ce que** l'électrode du catalyseur est une électrode mise à la masse.
